# FASCICULE DE BREVET EUROPEEN

(11) **EP 4 096 968 B1**
(45) Date de publication et mention de la délivrance du brevet: **06.03.2024**
(21) Numéro de dépôt: 21702227.6
(22) Date de dépôt: 26.01.2021
(51) Int. Cl.: B60R 13/08, G10K 11/168, B60R 21/214

(54) **SYSTÈME DE PROTECTION ACOUSTIQUE POUR VÉHICULE AUTOMOBILE**
SCHALLSCHUTZSYSTEM FÜR EIN KRAFTFAHRZEUG
ACOUSTIC PROTECTION SYSTEM FOR A MOTOR VEHICLE

(30) Priorité: 28.01.2020 FR 2000839
(43) Date de publication de la demande: 07.12.2022
(73) Titulaire: TREVES PRODUCTS, SERVICES & INNOVATION, 75008 Paris (FR)
(72) Inventeur: DUVAL, Arnaud, 75008 Paris (FR); CRIGNON, Guillaume, 75008 Paris (FR); ROUX, Maxime, 75008 Paris (FR); SCHUMACHER, Guillaume, 75008 Paris (FR)
(74) Mandataire: Sayettat, Julien Christian
(86) Numéro de dépôt international: PCT/EP2021/051770
(87) Numéro de publication internationale: WO 2021/151901

(56) Documents cités:
- EP-A1- 2 871 637
- DE-T2-602004 012 504
- JP-A- 2010 031 579
- JP-B2- 3 465 622

## Description

L'invention concerne un système de protection acoustique pour véhicule automobile.

EP 2 871 637 A1 divulgue un système de protection acoustique selon le préambule de la revendication 1.

Il est connu de réaliser un système de protection acoustique pour véhicule automobile, ledit système comprenant :
- deux parois s'étendant face à face,
- une couche de découplage acoustique élastiquement compressible disposée en compression au moins selon sa périphérie entre lesdites parois, ladite couche présentant deux faces opposées se plaquant respectivement sur chacune desdites parois, lesdites faces se reliant entre elles par une tranche.

La présence d'une telle couche de découplage mise en compression permet d'obtenir un effet amortissant se traduisant par une amélioration du traitement du bruit « solidien ».

Et le fait d'utiliser une couche de découplage en lieu et place d'éléments discrets - tels que des plots compressible - permet non seulement de réaliser un amortissement mais aussi d'améliorer la transparence acoustique de l'ensemble (isolation acoustique).

Un tel agencement peut notamment être mis en oeuvre à l'extérieur de l'habitacle. Il permet alors d'empêcher une partie du bruit extérieur d'être propagé à l'intérieur de l'habitacle, ce qui permet d'alléger les moyens de protection acoustique usuellement mis en oeuvre au sein dudit habitacle, qu'ils soient basés sur des principes d'isolation et/ou d'absorption.

Il permet également d'éviter, ou du moins de diminuer, l'emploi de matériaux amortissant, par exemple à base de bitume (traitement parfois dénommé IFF), qui sont usuellement déposés sur des parois du type des tôles de plancher.

Il résulte de toutes ces possibilités une simplification et un allègement du véhicule.

Cependant, il est dans certains cas nécessaire, par exemple quand la couche de découplage est à proximité du sol, de garantir la non pénétration de liquides - notamment d'eau - au sein de ladite couche, et ceci notamment par sa tranche qui n'est pas protégée par les parois, ceci afin de préserver les propriétés de découplage de ladite couche.

Et une telle protection doit être atteinte tout en permettant à la couche de découplage de pouvoir se comprimer lors de son montage au sein du système.

L'invention a pour but de proposer un système permettant de satisfaire à ces exigences.

A cet effet, l'invention propose un système de protection acoustique pour véhicule automobile, ledit système comprenant :
- deux parois s'étendant face à face,
- une couche de découplage acoustique élastiquement compressible disposée en compression au moins selon sa périphérie entre lesdites parois, ladite couche présentant deux faces opposées se plaquant respectivement sur chacune desdites parois, lesdites faces se reliant entre elles par une tranche,
sachant que :
- ladite couche est ensachée dans une poche en film plastique refermée de manière à former une barrière étanche sur ladite tranche,
- au moins un orifice de passage d'air est ménagé dans ladite poche en regard d'au moins une desdites faces, ledit orifice étant disposé à distance de ladite tranche de manière à ménager autour dudit orifice un joint d'étanchéité réalisé par l'appui de ladite poche sur ladite paroi correspondante.

Avec l'agencement proposé, la couche de découplage est protégée des liquides par la poche.

En outre, la présence d'au moins un orifice dans la poche permet une évacuation d'une partie de l'air compris dans la poche lors de la mise en compression de la couche de découplage pendant son montage au sein du système.

Et le positionnement de l'orifice tel que prévu permet de créer une étanchéité sur son pourtour, et ainsi d'empêcher la pénétration de liquides depuis l'extérieur vers ledit orifice.

D'autres particularités et avantages de l'invention apparaîtront dans la description qui suit, faite en référence aux figures jointes, dans lesquelles :

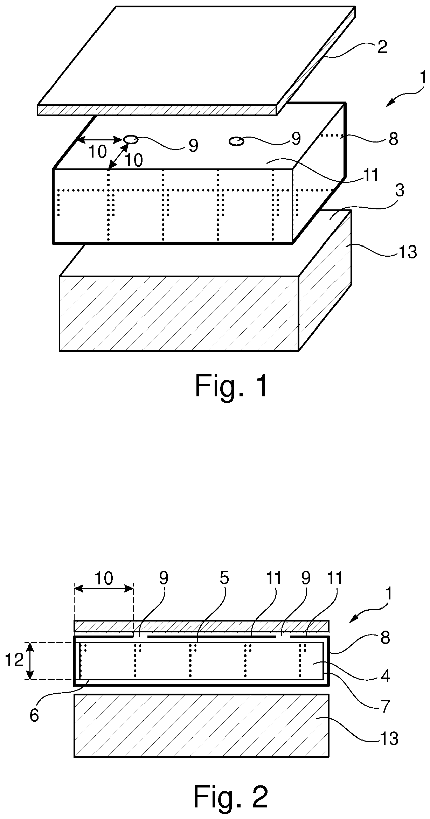

[Fig.1] est une représentation schématique en perspective éclatée d'un système selon une réalisation,
[Fig.2] est une représentation schématique en coupe du système de la figure 1 en vue non éclatée.

En référence aux figures, on décrit un système 1 de protection acoustique pour véhicule automobile, ledit système comprenant :
- deux parois 2,3 s'étendant face à face,
- une couche de découplage acoustique 4 élastiquement compressible disposée en compression au moins selon sa périphérie entre lesdites parois, ladite couche présentant deux faces 5,6 opposées se plaquant respectivement sur chacune desdites parois, lesdites faces se reliant entre elles par une tranche 7,
sachant que :
- ladite couche est ensachée dans une poche 8 en film plastique refermée de manière à former une barrière étanche sur ladite tranche,
- au moins un - plusieurs selon la réalisation représentée - orifice 9 de passage d'air est ménagé dans ladite poche en regard d'au moins une 5,6 desdites faces - une seule 5 selon la réalisation représentée -, ledit orifice étant disposé à distance 10 de ladite tranche de manière à ménager autour dudit orifice un joint d'étanchéité 11 - notamment vis-à-vis de liquides venant de l'extérieur tels que l'eau - réalisé par l'appui de ladite poche sur ladite paroi correspondante - en l'occurrence la paroi 2 selon la réalisation représentée.

Selon la réalisation représentée, la couche de découplage 4 est mise en compression selon toute sa surface, ce qui permet d'optimiser l'effet amortissant.

Selon une réalisation, l'orifice 9 est disposé à une distance 10 d'au moins 20 mm de la tranche 7.

Selon diverses réalisations, la couche de découplage 4 est à base de mousse - soit découpée, soit moulée, notamment dans le cas d'une géométrie complexe - ou de matériau fibreux.

Selon une réalisation, la masse volumique de la couche de découplage 4 est comprise entre 25 et 80 kg/m³.

Selon une réalisation, la couche de découplage 4 est comprimée de 5 à 50 % par rapport à son épaisseur à l'état non comprimé, et en particulier de 25 à 35%.

Selon une réalisation, la couche de découplage 4 comprimée présente une épaisseur 12 comprise entre 5 et 50 mm.

Selon une réalisation, la couche de découplage 4 présente une caractéristique de contrainte-déformation relative en compression inférieure à 5 kPa, et notamment à 3 kPa, la mesure étant réalisée pour un enfoncement de 25% de l'épaisseur initiale de l'éprouvette au quatrième cycle de compression, ladite caractéristique étant mesurée selon la norme ISO 3386-1 en vigueur à la date de priorité de la présente demande.

Selon une réalisation, la couche de découplage 4 présente un module de Young inférieur à 50 kPa, notamment inférieur à 20 kPa.

Selon une réalisation, la couche de découplage 4 présente un facteur de perte structural supérieur à 0,18, de manière à présenter des caractéristiques accentuées d'amortissement, à une température de 20°C et à une fréquence de 20 Hz.

Selon la réalisation représentée, les parois 2,3 sont sensiblement parallèles.

Selon la réalisation représentée, une paroi 3 est formée par une face de bac de batterie 13 - en particulier pour véhicule électrique - et l'autre paroi 2 est formée par une tôle de plancher dudit véhicule.

Selon une réalisation non représentée, les parois 2,3 sont parties d'un corps métallique creux, ledit corps étant notamment une joue d'aile.

## Revendications

1. Système (1) de protection acoustique pour véhicule automobile, ledit système comprenant :
• deux parois (2,3) s'étendant face à face,
• une couche de découplage acoustique (4) élastiquement compressible disposée en compression au moins selon sa périphérie entre lesdites parois, ladite couche présentant deux faces opposées (5,6) se plaquant respectivement sur chacune desdites parois, lesdites faces se reliant entre elles par une tranche (7),
ledit système étant **caractérisé en ce que** :
• ladite couche est ensachée dans une poche (8) en film plastique refermée de manière à former une barrière étanche sur ladite tranche,
• au moins un orifice (9) de passage d'air est ménagé dans ladite poche en regard d'au moins une desdites faces, ledit orifice étant disposé à distance (10) de ladite tranche de manière à ménager autour dudit orifice un joint d'étanchéité (11) réalisé par l'appui de ladite poche sur ladite paroi correspondante.

2. Système selon la revendication 1, **caractérisé en ce que** l'orifice (9) est disposé à une distance (10) d'au moins 20 mm de la tranche (7).

3. Système selon l'une des revendications 1 ou 2, **caractérisé en ce que** la couche de découplage (4) est à base de mousse ou de matériau fibreux.

4. Système selon l'une quelconque des revendications 1 à 3, **caractérisé en ce que** la couche de découplage (4) est comprimée de 5 à 50 % par rapport à son épaisseur à l'état non comprimé.

5. Système selon l'une quelconque des revendications 1 à 4, **caractérisé en ce que** la couche de découplage (4) comprimée présente une épaisseur comprise entre 5 et 50 mm.

6. Système selon l'une quelconque des revendications 1 à 5, **caractérisé en ce que** la couche de découplage (4) présente un module de Young inférieur à 50 kPa.

7. Système selon l'une quelconque des revendications 1 à 6, **caractérisé en ce que** la couche de découplage (4) présente un facteur de perte structural supérieur à 0,18, à une température de 20°C et à une fréquence de 20 Hz.

8. Système selon l'une quelconque des revendications 1 à 7, **caractérisé en ce qu'**une paroi (3) est formée par une face de bac de batterie (13) et l'autre paroi (2) est formée par une tôle de plancher du véhicule.

9. Système selon l'une quelconque des revendications 1 à 7, **caractérisé en ce que** les parois (2,3) sont parties d'un corps métallique creux.

## Patentansprüche

1. Schallschutzsystem (1) für ein Kraftfahrzeug, wobei das System Folgendes umfasst:
• zwei Wände (2, 3), die sich einander gegenüberliegend erstrecken,
• eine elastisch komprimierbare akustische Trennungsschicht (4), die mindestens entlang ihres Umfangs zwischen den Wänden komprimiert angeordnet ist, wobei die Schicht zwei gegenüberliegende Flächen (5, 6) aufweist, die sich jeweils gegen jede der Wände drücken, wobei die Flächen durch einen Rand (7) miteinander verbunden sind,
wobei das System **dadurch gekennzeichnet ist, dass**:
• die Schicht in einem Beutel (8) aus Kunststofffolie eingeschlossen ist, der so verschlossen ist, dass er eine dichte Barriere am Rand bildet,
• mindestens ein Luftdurchgangsloch (9) in dem Beutel gegenüber mindestens einer der Flächen ausgebildet ist, wobei das Loch so in einem Abstand (10) von dem Rand angeordnet ist, dass um das Loch herum eine Abdichtung (11) ausgebildet wird, die durch das Anliegen des Beutels auf der entsprechenden Wand erzeugt wird.

2. System nach Anspruch 1, **dadurch gekennzeichnet, dass** das Loch (9) in einem Abstand (10) von mindestens 20 mm vom Rand (7) angeordnet ist.

3. System nach einem der Ansprüche 1 oder 2, **dadurch gekennzeichnet, dass** die Trennungsschicht (4) auf Schaumstoffbasis oder aus Fasermaterial besteht.

4. System nach einem der Ansprüche 1 bis 3, **dadurch gekennzeichnet, dass** die Trennungsschicht (4) um 5 bis 50 % im Verhältnis zu ihrer Dicke im nicht komprimierten Zustand komprimiert ist.

5. System nach einem der Ansprüche 1 bis 4, **dadurch gekennzeichnet, dass** die komprimierte Trennungsschicht (4) eine Dicke zwischen 5 und 50 mm aufweist.

6. System nach einem der Ansprüche 1 bis 5, **dadurch gekennzeichnet, dass** die Trennungsschicht (4) einen Elastizitätsmodul von weniger als 50 kPa aufweist.

7. System nach einem der Ansprüche 1 bis 6, **dadurch gekennzeichnet, dass** die Trennungsschicht (4) einen strukturellen Verlustfaktor von mehr als 0,18 bei einer Temperatur von 20 °C und einer Frequenz von 20 Hz aufweist.

8. System nach einem der Ansprüche 1 bis 7, **dadurch gekennzeichnet, dass** eine Wand (3) von einer Fläche eines Batteriegehäuses (13) gebildet wird und die andere Wand (2) von einer Bodenplatte des Fahrzeugs gebildet wird.

9. System nach einem der Ansprüche 1 bis 7, **dadurch gekennzeichnet, dass** die Wände (2, 3) Teil eines Metallhohlkörpers sind.

## Claims

1. Acoustic protection system (1) for a motor vehicle, said system comprising:
• two walls (2, 3) extending opposite each other,
• an elastically compressible acoustic decoupling layer (4) arranged in compression at least along its periphery between said walls, said layer having two opposing faces (5, 6) pressed respectively against each of said walls, said faces being connected to each other by an edge (7),
said system being **characterised in that**:
• said layer is enclosed in a bag (8) made from plastic film closed so as to form a sealed barrier on said edge,
• at least one air passage hole (9) is provided in said bag opposite at least one of said faces, said hole being arranged at a distance (10) from said edge so as to provide around said hole a seal (11) created by said bag bearing on said corresponding wall.

2. System according to claim 1, **characterised in that** the hole (9) is arranged at a distance (10) of at least 20 mm from the edge (7).

3. System according to one of claims 1 or 2, **characterised in that** the decoupling layer (4) is based on foam or fibrous material.

4. System according to any one of claims 1 to 3, **characterised in that** the decoupling layer (4) is compressed by 5 to 50% in relation to its thickness in the non-compressed state.

5. System according to any one of claims 1 to 4, **characterised in that** the compressed decoupling layer (4) has a thickness between 5 and 50 mm.

6. System according to any one of claims 1 to 5, **characterised in that** the decoupling layer (4) has a Young's modulus less than 50 kPa.

7. System according to any one of claims 1 to 6, **characterised in that** the decoupling layer (4) has a structural loss factor greater than 0.18, at a temperature of 20°C and at a frequency of 20 Hz.

8. System according to any one of claims 1 to 7, **characterised in that** one wall (3) is formed by a battery pack face (13) and the other wall (2) is formed by a floor panel of the vehicle.

9. System according to any one of claims 1 to 7, **characterised in that** the walls (2, 3) are part of a hollow metal body.
